# FASCICULE DE BREVET EUROPEEN

(11) **EP 3 448 711 B1**
(45) Date de publication et mention de la délivrance du brevet: **15.04.2020**
(21) Numéro de dépôt: 17725662.5
(22) Date de dépôt: 24.04.2017
(51) Int. Cl.: B60K 35/00, B60W 50/14, B60W 30/14, B60W 40/04, B60W 40/10, B60W 50/08, G05D 1/00

(54) **SYSTÈME DE CONDUITE AUTOMATISÉE POUR VÉHICULE AUTOMOBILE DOTÉ D'UNE INTERFACE DE COMMUNICATION VISUELLE AVANCÉE**
AUTOMATISIERTES FAHRSYSTEM FÜR EIN KRAFTFAHRZEUG MIT EINER FORTGESCHRITTENEN VISUELLEN KOMMUNIKATIONSSCHNITTSTELLE
AUTOMATED DRIVING SYSTEM FOR A MOTOR VEHICLE PROVIDED WITH AN ADVANCED VISUAL COMMUNICATION INTERFACE

(30) Priorité: 25.04.2016 FR 1653627
(43) Date de publication de la demande: 06.03.2019
(73) Titulaire: PSA Automobiles SA, 78300 Poissy (FR)
(72) Inventeur: LAINE, Vincent, 78340 Les Clayes Sous Bois (FR); FERON, Stéphane, 92350 Le Plessis Robinson (FR); TACCORI DUVERGEY, Céline, 92120 Montrouge (FR)
(74) Mandataire: Jeannin, Laurent Jean-Pierre
(86) Numéro de dépôt international: PCT/FR2017/050973
(87) Numéro de publication internationale: WO 2017/187077

(56) Documents cités:
- DE-A1-102006 060 554
- DE-A1-102014 216 105
- US-A1- 2014 139 341
- US-A1- 2014 328 077

## Description

### Domaine de l'invention

La présente invention concerne d'une manière générale les systèmes de conduite automatisée d'un véhicule automobile.

### Arrière-plan de l'invention

Les systèmes d'assistance à la conduite sont désormais largement répandus dans les véhicules automobiles récents et connaissent un développement rapide.

On connait ainsi depuis un certain nombre d'années les régulateurs de vitesse adaptatifs, mieux connus sous l'acronyme anglais ACC (pour « Adaptive Cruise Control »). Un tel mode d'assistance ajuste de manière automatique la vitesse afin de maintenir un intervalle de sécurité constant avec le véhicule précédant l'utilisateur à partir des informations recueillis sur ce véhicule (notamment la distance et la vitesse d'approche) à l'aide d'un ou plusieurs capteurs de type radar, lidar ou infrarouge.

On connaît également, notamment de la demande de brevet américaine US 2013/0096767, des systèmes dynamiques anti-franchissement involontaire de ligne. Ces derniers, désignés généralement sous les acronymes ALKA (pour « Active Lane Keep Assist »), LKAS (pour « Lane Keep Assistance System), ALA (pour « Active Lane Assist) ou encore ALC (pour « Active Lane Control ») détectent les lignes de marquages au sol à l'aide de capteurs et/ou de caméras optiques, et interviennent dynamiquement sur le véhicule lorsque ce dernier s'écarte de sa voie de circulation. Dans un tel cas de figure, le système d'assistance à la conduite va alors corriger automatiquement la direction du véhicule et/ou activer le freinage.

Plus récemment, des systèmes proposant des modes de conduite totalement automatisée ont vu le jour afin de soulager le conducteur dans des situations de trafic dense sur des routes à chaussées séparées où la vitesse du véhicule est réduite.

Tel est notamment le cas des modes d'assistance à la conduite en embouteillage (plus connus sous l'acronyme anglais TJC pour « Traffic Jam Chauffeur ») destinés à délester le conducteur dans des situations de trafic dense ou de bouchon (vitesse inférieure à 50/70 km/h) sur des routes à chaussées séparées (autoroutes et voies rapides).

On peut également citer les modes d'assistance à la conduite sur autoroute communément désignés sous les acronymes HC (pour « Highway Chauffeur ») et aptes à délester entièrement le conducteur dans des situations de trafic fluide (vitesse proche de la limite réglementaire) sur des routes à chaussées séparées.

En cas de dégradation du contexte environnemental de conduite nécessitant un retour dans le mode de conduite manuel, ces modes d'assistance de type TJC ou HC sont capables de maintenir un guidage entièrement automatisé du véhicule sur une période de transition assez longue d'une dizaine de secondes avant un retour vers le mode de conduite manuel, de sorte que le conducteur n'est pas tenu de garder les yeux fixés sur la route et peut vaquer à d'autres occupations (passage de communications téléphoniques, visionnage d'un film via le système d'info-divertissement du véhicule, lancement d'un jeu vidéo sur un ordinateur ou une tablette tactile, lecture d'un livre ou d'un magazine, etc.).

Enfin, dernièrement sont apparus des modes d'assistance à la conduite sur autoroute communément désignés par les acronymes HAD (pour « Highway Automated Driving ») ou AHDA (pour « Automatic Highway Driving Assist ») et aptes également à délester le conducteur sur des routes à chaussées séparées mais sans restrictions d'usage relatives à la vitesse du véhicule ou à la densité du trafic routier.

Dans un tel mode, le guidage entièrement automatisé ne peut être maintenu que sur une période de transition courte (comprise typiquement entre 1 et 3 secondes) en cas de dégradation du contexte de conduite nécessitant un retour en conduite manuelle. Il est donc indispensable que le conducteur maintienne en permanence un certain niveau d'attention sur la route afin d'être prêt à reprendre instantanément en mains le véhicule.

Dans les véhicules dotés de tels systèmes de conduite automatisée, il est essentiel de prévoir une interface de communication apte à informer le conducteur de l'état de ce système.

La demande de brevet américaine US 9,134,729 divulgue ainsi un système de conduite automatisée pour véhicule automobile comportant une interface de communication visuelle comprenant plusieurs indicateurs lumineux sur le volant ainsi qu'une pluralité d'afficheurs situés sur la planche de bord et aptes à émettre des signaux lumineux de différentes couleurs selon l'état du système.

A l'usage, on constate toutefois qu'une telle interface de communication visuelle s'avère complexe à appréhender pour le conducteur et qu'elle peut provoquer des réactions inappropriées de sa part, potentiellement dangereuses.

On connait aussi par le document US2014139341 un système pour gérer l'attention du conducteur pendant la conduite. Le conducteur peut conduire en utilisant un système de conduite autonome ou un système de conduite autonome à capacité limitée. Le système peut détecter, à l'aide d'un capteur, les caractéristiques d'un conducteur ; déterminer, sur la base des caractéristiques détectées du conducteur, si celui-ci exerce un contrôle de surveillance suffisant sur le véhicule ; et fournir une série d'une ou plusieurs invites, dans laquelle l'intrusion de chaque invite est liée à la détermination si le conducteur exerce un contrôle de surveillance suffisant du véhicule.

### Objet et résumé de l'invention

La présente invention vise donc à améliorer la communication visuelle d'un tel système de conduite automatisée afin de permettre au conducteur d'être mieux informé de l'état du système de conduite automatisée.

Elle propose à cet effet un système de conduite automatisée pour véhicule automobile comportant une interface de communication visuelle destinée à informer le conducteur sur l'état dudit système de conduite et comprenant un indicateur lumineux apte à émettre des signaux lumineux sur le volant dudit véhicule ; caractérisé en ce que ladite interface de communication visuelle comporte en outre un afficheur tête haute apte à afficher d'autres signaux lumineux dans le champ de vision du conducteur au-delà du pare-brise dudit véhicule.

L'interface de communication visuelle du système de conduite selon l'invention permet d'afficher l'ensemble des signaux d'information concernant l'état de ce système de conduite dans le champ de vision du conducteur de sorte que son regard puisse en prendre conscience instantanément et avec une fiabilité accrue par rapport aux interfaces existantes dans lesquels ce dernier devait systématiquement déplacer son regard latéralement le long de la planche de bord pour repérer d'éventuels signaux complémentaires émis par d'autres indicateurs visuels.

Selon des caractéristiques préférées du système de conduite automatisée, prises seules ou en combinaison :
- Ce dernier propose deux mode de conduite entièrement automatisée à désengagement vers le mode de conduite manuel, en cas de non compatibilité du contexte de conduite avec leur poursuite, au terme de deux phases de transition de durées différentes, les informations relatives à l'état de l'un desdits modes de conduite automatisée étant transmises par des signaux émis uniquement par ledit indicateur lumineux sur volant, tandis que celles concernant l'état de l'autre desdits modes de conduite automatisée sont transmises par des signaux émis simultanément par ledit indicateur lumineux sur volant et ledit afficheur tête haute ;
- ledit afficheur tête haute est apte à transmettre des signaux de différentes couleurs de type fixes, clignotants et/ou chenillard ;
- ledit afficheur tête haute (32) comporte un projecteur à diodes électroluminescentes apte à projeter un signal lumineux directement sur le pare-brise dudit véhicule de sorte que ce dernier soit réfléchi vers ledit conducteur qui en perçoit une image virtuelle au-delà dudit pare-brise ;
- ledit projecteur à diodes électroluminescentes est implanté derrière le tableau de bord ou dans le plafonnier dudit véhicule ;
- ledit afficheur tête haute comporte un projecteur apte à projeter un signal lumineux sur un réflecteur partiellement transparent qui le réfléchit vers ledit conducteur qui en perçoit une image virtuelle au-delà dudit pare-brise ;
- ledit indicateur lumineux sur volant est apte à émettre des signaux de différentes couleurs de type fixes ou clignotants ;
- ledit indicateur lumineux sur volant comporte au moins un cerclage lumineux ;
- ledit cerclage lumineux entoure une zone dotée d'organes de commande permettant d'interagir avec ledit système ; et/ou
- ledit indicateur lumineux sur volant comporte deux dits cerclages lumineux implantés sur deux branches latérales dudit volant reliant son moyeu central à sa jante périphérique.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente un diagramme fonctionnel d'un système de conduite automatisée pour véhicule automobile selon l'invention ;
- la figure 2 est une vue de l'habitacle d'un véhicule automobile doté d'un tel système de conduite automatisée ; et
- la figure 3 est un organigramme illustrant un mode privilégié de fonctionnement de l'interface de communication visuelle du système de conduite automatisée selon l'invention.

### Description détaillée d'un mode préféré de réalisation

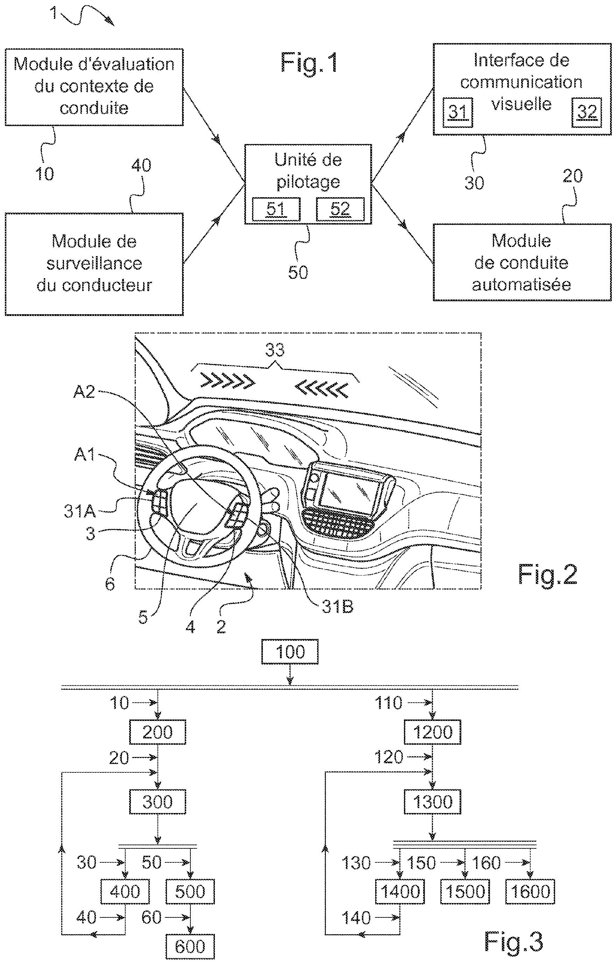

Le système de conduite automatisée 1 représenté sur la figure 1 propose deux modes complémentaires de conduite entièrement automatisée du véhicule :
- un premier mode de type TJC ou HC à dégagement, en cas de non compatibilité du contexte de conduite avec sa poursuite, vers le mode de conduite manuel au terme d'une première phase de transition dite « longue » dont la durée est par exemple supérieure ou égale à 10 secondes ; et
- un second mode de type HAD à désengagement, en cas de non compatibilité du contexte de conduite avec sa poursuite, vers le mode de conduite manuel au terme d'une seconde phase de transition dite « courte » dont la durée est moindre que celle de la première phase de transition et par exemple inférieure ou égale à 3 secondes.

En référence à cette figure 1, ce système de conduite automatisée 1 comporte un module d'évaluation du contexte de conduite 10, un module de conduite automatisée 20, une interface de communication visuelle 30, un module de surveillance du conducteur 40, ainsi qu'une unité de pilotage 50.

Le module d'évaluation du contexte de conduite 10 comporte des moyens d'acquisition vidéo (par exemple, une caméra de type CCD orientée vers l'avant du véhicule) délivrant des images permettant de déterminer le type de route empruntée (autoroute, voie rapide ou bien route secondaire) à partir de certains paramètres caractéristiques tels que la largeur de la voie, le marquage au sol (couleur, largeur et espacement des lignes) et la présence éventuelle d'une barrière ou d'un terre-plein central de séparation entre les deux sens de circulation. L'analyse des images fournies par ces moyens d'acquisition vidéo permet en outre d'établir le niveau de fluidité du trafic routier.

Le module 10 comprend également une pluralité de capteurs mesurant certains paramètres internes de conduite tels que la vitesse instantanée du véhicule et l'angle de braquage du volant.

Ce module 10 comporte en outre un détecteur de pluie doté d'un capteur de type optique ou capacitif intégré par exemple à la partie supérieure du pare-brise, ainsi qu'une cartographie du réseau routier fournissant un certains nombre d'informations sur les prochains tronçons rencontrés par le véhicule (type de route, nombre de voies, degré de sinuosité, limites de vitesse, etc...).

Les données recueillies par le module d'évaluation du contexte de conduite 10 sont acheminés en temps réel vers le module de conduite automatisée 20.

Ce dernier comporte une pluralité d'actionneurs aptes à contrôler la direction, l'accélération, le freinage et la boîte de vitesse pour assurer la mise en œuvre des deux modes de conduite entièrement automatisés que propose le système 1.

L'interface de communication visuelle 30 comporte un indicateur lumineux 31 apte à émettre des signaux lumineux sur le volant 2 du véhicule, de différentes couleurs (par exemple, bleus, orange et rouges) et de type fixe ou clignotant.

Cet indicateur lumineux sur volant 31 est constitué ici par deux cerclages lumineux 31A, 31B implantés sur les deux branches latérales 3, 4 du volant 2 reliant son moyeu central 5 à sa jante périphérique circulaire 6, et entourant deux zones A1, A2 dotées d'organes de commande permettant d'interagir avec le système de conduite automatisée 1 (figure 2).

En variante, cet indicateur lumineux sur volant comprend une barrette lumineuse comprenant une pluralité de diodes électroluminescentes (LEDS) multicolores alignées et qui est implantée sur la portion supérieure de la jante circulaire du volant en étant intégrée dans le gainage de cette jante.

L'interface de communication 30 comporte également un afficheur tête haute 32 apte à afficher des signaux lumineux 33 de différentes couleurs (par exemple, bleus, orange et rouges) et de type fixe, clignotant et/ou chenillard dans le champ de vision du conducteur au-delà du pare-brise du véhicule.

En l'espèce, ces signaux lumineux sont constitués par des motifs lumineux 33 formé par chacun deux séries de plusieurs chevrons disposées en miroir l'une de l'autre.

L'afficheur tête haute 32 comporte un projecteur comprenant avantageusement une pluralité de diodes électroluminescentes (LEDS) multicolores à haute luminosité et apte à projeter un signal lumineux directement sur le pare-brise qui le réfléchit vers le conducteur : ce dernier en percevant alors une image virtuelle dans son champ de vision au-delà du pare-brise.

Ce projecteur à LEDS est de préférence implanté derrière le tableau de bord ou dans le plafonnier du véhicule de sorte à être dissimulé du regard du conducteur.

En variante, l'afficheur tête haute est d'un type différent : le projeteur projetant un signal lumineux non pas directement sur le pare-brise mais vers un réflecteur partiellement transparent qui le réfléchit vers le conducteur de sorte que ce dernier en perçoive une image virtuelle dans son champ de vision au-delà du pare-brise. Dans un tel cas de figure, l'afficheur peut comporte également un ou plusieurs miroirs de repliement intermédiaires permettant de compacter l'afficheur en repliant le chemin optique.

Afin que le conducteur s'y retrouve plus facilement, les informations relatives à l'état de l'un des deux modes de conduite automatisée sont avantageusement transmises par des signaux émis uniquement par ledit indicateur lumineux sur volant, tandis que celles concernant l'état de l'autre mode de conduite automatisée sont transmises par des signaux émis simultanément par l'indicateur lumineux sur volant et l'afficheur tête haute.

Ces signaux lumineux peuvent en outre être éventuellement associés dans certaines circonstances à des signaux sonores émis via les hauts parleurs du système d'info-divertissement et/ou par l'intermédiaire d'une alarme système indépendante.

Le module de surveillance du conducteur 40 comprend un dispositif de détection de la présence des mains sur le volant doté d'une nappe capacitive implantée entre le rembourrage interne en mousse et l'enveloppe extérieure d'habillage en tissu ou cuir.

La perturbation du champ électrique causée par la présence des mains sur le volant entraine une variation de la capacité de cette nappe.

Cette détection peut également être réalisée par d'autres moyens et notamment par l'intermédiaire de capteurs de pression implantés à l'intérieur du volant et aptes à mesurer la variation locale de pression survenant lorsque le conducteur positionne ses mains sur ce volant ou les retire.

L'unité de pilotage 50 comporte un calculateur 51 ainsi qu'un module de stockage 52 comprenant de la mémoire non volatile de type EEPROM ou FLASH et de la mémoire vive.

Cette mémoire non volatile stocke un processus gérant le fonctionnement de l'interface de communication visuelle 50.

On va maintenant décrire à l'appui de l'organigramme de la figure 3, un mode privilégié de fonctionnement de cette interface de communication visuelle 30 depuis un état initial dans lequel le véhicule est en phase de conduite manuelle (étape initiale 100).

Lorsque le module d'évaluation du contexte de conduite 10 détecte que le contexte de conduite est compatible avec l'activation du premier mode de conduite automatisée de type TJC ou HC à phase de transition « longue » (événement 10), l'indicateur lumineux sur volant 31 émet un signal lumineux clignotant d'une première couleur prédéterminée (par exemple, bleue) tandis que l'afficheur tête haute 32 affiche dans le champ de vision du conducteur un signal lumineux également clignotant et de même couleur de sorte à informer ce conducteur que ce premier mode de conduite automatisée est disponible (étape 200).

Ces deux signaux sont en outre émis selon une première fréquence prédéterminée avantageusement égale à 1HZ.

Ces deux signaux perdurent jusqu'à ce que le contexte de conduite se dégrade suffisamment pour ne plus permettre son activation ou que le conducteur active ce premier mode de conduite automatisée en appuyant par exemple sur l'un des organes de commande situés dans les deux zones A1, A2 du volant. En variante, on peut également prévoir que l'émission de ces signaux cesse au terme d'un délai prédéterminé par exemple égal à 3 secondes afin de ne pas perturber le conducteur trop longtemps.

Dès que ce premier mode de conduite automatisé est activé (événement 20), les signaux émis par l'indicateur lumineux sur volant 31 et par l'afficheur tête haute 32 demeurent de la même première couleur prédéterminée (par exemple bleu) que pendant l'étape 200 mais deviennent fixes ; de sorte à informer le conducteur que la conduite du véhicule est assurée de manière entièrement automatisée par le premier mode de conduite à phase de transition « longue » et que ce dernier peut retirer ses mains du volant et ses pieds des pédales et se détendre en regardant par exemple un film ou en naviguant sur Internet (étape 300).

Pendant cette phase de conduite automatisée, l'indicateur lumineux sur volant 31 et l'afficheur tête haute 32 vont émettre périodiquement (événement 30), selon une première période prédéterminée comprise avantageusement entre 20 et 30 minutes, respectivement un signal lumineux clignotant de la même première couleur prédéterminée (par exemple, bleu) mais selon une deuxième fréquence prédéterminée plus faible que la première (par exemple égale à 0,5 Hz), et un signal de type chenillard de la même première couleur prédéterminée (par exemple, bleu); de sorte à informer le conducteur qu'il doit réaliser une action prédéterminée permettant de s'assurer que ce dernier maintient un niveau minimal d'attention (étape 400).

Cette action peut par exemple consister pour le conducteur à apposer au moins l'une de ses mains sur le volant ou à appuyer sur l'un des organes de commande situés dans les deux zones A1, A2 du volant.

Dès que l'action demandée a été réalisée par le conducteur (événement 40), le processus revient à l'étape 300.

Lorsque le module d'évaluation du contexte de conduite 10 détecte une dégradation du contexte environnemental de conduite empêchant la poursuite de ce premier mode de conduite automatisée au-delà de sa phase de transition « longue » (événement 50), l'indicateur lumineux sur volant 31 et l'afficheur tête haute 32 vont émettre pendant une phase informative s'étalant sur une durée prédéterminée inférieure à cette phase de transition « longue » (de préférence supérieure à la moitié de cette dernière et/ou comprise entre 6 et 8 s) des signaux lumineux clignotants d'une deuxième couleur prédéterminée (par exemple, orange) selon une troisième fréquence prédéterminée (de préférence identique à la première fréquence prédéterminée et par exemple égale à 1Hz); de sorte à informer le conducteur qu'il doit se préparer à reprendre en mains le véhicule (étape 500).

Au terme de cette phase informative (événement 60), l'indicateur lumineux sur volant 31 et l'afficheur tête haute 32 vont émettre pendant une phase d'alerte courant jusqu'au terme de la phase de transition « longue » des signaux lumineux clignotants d'une troisième couleur prédéterminée (par exemple, rouge) selon une quatrième fréquence prédéterminée (de préférence supérieure à la première fréquence prédéterminée et par exemple égale à 2Hz) ; de sorte à informer le conducteur qu'il doit reprendre en mains le véhicule (étape 600).

Revenons maintenant à l'étape initiale 100 où le véhicule est en phase de conduite manuelle.

Lorsque le module d'évaluation du contexte de conduite 10 détecte que le contexte de conduite est compatible avec l'activation du second mode de conduite automatisée de type HAD à phase de transition « courte » mais pas avec le premier de type TJC ou HC à transition « longue » (événement 110), seul l'indicateur lumineux sur volant 31 émet un signal lumineux clignotant de la première couleur prédéterminée (par exemple, bleue) et selon la première fréquence prédéterminée avantageusement égale à 1HZ ; de sorte à informer ce conducteur que ce second mode de conduite automatisée est disponible (étape 1200).

Ce signal perdure jusqu'à ce que le contexte de conduite se dégrade suffisamment pour ne plus permettre son activation ou que le conducteur active ce second mode de conduite automatisée en appuyant par exemple sur l'un des organes de commande situés dans les deux zones A1, A2 du volant. En variante, on peut également prévoir que l'émission de ce signal cesse au terme d'un délai prédéterminé par exemple égal à 3 secondes afin de ne pas perturber le conducteur trop longtemps.

Dès que ce second mode de conduite automatisé est activé (événement 120), le signal émis par l'indicateur lumineux sur volant 31 demeure de la même première couleur prédéterminée (par exemple bleu) que pendant l'étape 1200 mais devient fixe ; de sorte à informer le conducteur que la conduite du véhicule est assurée de manière entièrement automatisée par le second mode de conduite à phase de transition « courte » et que ce dernier peut retirer ses mains du volant et ses pieds des pédales en maintenant toutefois son regard sur la route (étape 1300).

Pendant cette phase de conduite automatisée, l'indicateur lumineux sur volant 31 va émettre périodiquement (événement 130), selon une seconde période prédéterminée (de préférence inférieure à la première et comprise avantageusement entre 10 et 15 minutes), un signal lumineux clignotant de la même première couleur prédéterminée (par exemple, bleu) mais selon la deuxième fréquence prédéterminée (par exemple égale à 0,5 Hz) ; de sorte à informer le conducteur qu'il doit réaliser une action prédéterminée permettant de s'assurer que ce dernier maintient un niveau d'attention suffisant (étape 1400).

Cette action peut par exemple consister pour le conducteur à apposer au moins l'une de ses mains sur le volant ou à appuyer sur l'un des organes de commande situés dans les deux zones A1, A2 du volant.

Dès que l'action demandée a été réalisée par le conducteur (événement 140), le processus revient à l'étape 1300.

Lorsque le module d'évaluation du contexte de conduite 10 détecte une dégradation du contexte environnemental de conduite empêchant la poursuite de ce second mode de conduite automatisée au-delà de sa phase de transition « courte » (événement 150), l'indicateur lumineux sur volant 31 va émettre pendant une phase d'alerte s'étalant jusqu'au terme de la phase de transition « courte » un signal lumineux clignotant de la troisième deuxième couleur prédéterminée (par exemple, rouge) et selon la quatrième fréquence prédéterminée (par exemple égale à 2Hz) ; de sorte à informer le conducteur qu'il doit reprendre en mains le véhicule (étape 1500).

En variante, on peut également prévoir que l'afficheur tête haute 32 émette également lors de cette phase d'alerte un signal lumineux clignotant de la troisième deuxième couleur prédéterminée (par exemple, rouge) et selon la quatrième fréquence prédéterminée (par exemple égale à 2Hz) ; de sorte à ce que le conducteur réagisse plus rapidement mais au détriment de la logique informative de ce mode de conduite automatisée associé de préférence à l'émission de signaux par le seul indicateur lumineux sur volant 31.

A l'inverse, lorsque le module d'évaluation du contexte de conduite 10 détecte, pendant que ce second mode de conduite automatisée est activé, une amélioration du contexte environnemental de conduite permettant l'activation du premier mode de conduite automatisée à transition « longue » (événement 160), l'indicateur lumineux sur volant 31 continue à émettre le signal fixe dans la première couleur prédéterminée (par exemple, bleu), tandis que l'afficheur tête haute 32 affiche dans le champ de vision du conducteur un signal lumineux clignotant de la même couleur émis par l'afficheur tête haute affiche dans le champ de vision du conducteur un signal lumineux clignotant et de même couleur (étape 1600).

## Revendications

1. Système de conduite automatisée pour véhicule automobile comportant une interface de communication visuelle (30) destinée à informer le conducteur sur l'état dudit système de conduite et comprenant un indicateur lumineux (31) apte à émettre des signaux lumineux sur le volant dudit véhicule ; ladite interface de communication visuelle (30) comportant en outre un afficheur tête haute (32) apte à afficher d'autres signaux lumineux dans le champ de vision du conducteur au-delà du pare-brise dudit véhicule, **caractérisé en ce qu'**il propose deux mode de conduite entièrement automatisée à désengagement vers le mode de conduite manuel, en cas de non compatibilité du contexte de conduite avec leur poursuite, au terme de deux phases de transition de durées différentes, les informations relatives à l'état de l'un desdits modes de conduite automatisée étant transmises par des signaux émis uniquement par ledit indicateur lumineux sur volant (31), tandis que celles concernant l'état de l'autre desdits modes de conduite automatisée sont transmises par des signaux émis simultanément par ledit indicateur lumineux sur volant (31) et ledit afficheur tête haute (32).

2. Système de conduite automatisée selon la revendication 1, **caractérisé en ce que** ledit afficheur tête haute (32) est apte à transmettre des signaux de différentes couleurs de type fixes, clignotants et/ou chenillard.

3. Système de conduite automatisée selon l'une des revendications 1 à 2, **caractérisé en ce que** ledit afficheur tête haute (32) comporte un projecteur à diodes électroluminescentes apte à projeter un signal lumineux directement sur le pare-brise dudit véhicule de sorte que ce dernier soit réfléchi vers ledit conducteur qui en perçoit une image virtuelle au-delà dudit pare-brise.

4. Système de conduite automatisée selon la revendication 3, **caractérisé en ce que** ledit projecteur à diodes électroluminescentes est implanté derrière le tableau de bord ou dans le plafonnier dudit véhicule.

5. Système de conduite automatisée selon l'une des revendications 1 à 2, **caractérisé en ce que** ledit afficheur tête haute (32) comporte un projecteur apte à projeter un signal lumineux sur un réflecteur partiellement transparent qui le réfléchit vers ledit conducteur qui en perçoit une image virtuelle au-delà dudit pare-brise.

6. Système de conduite automatisée selon l'une des revendications 1 à 5, **caractérisé en ce que** ledit indicateur lumineux sur volant (31) est apte à émettre des signaux de différentes couleurs de type fixes ou clignotants.

7. Système de conduite automatisée selon l'une des revendications 1 à 6, **caractérisé en ce que** ledit indicateur lumineux sur volant (31) comporte au moins un cerclage lumineux (31A, 31B).

8. Système de conduite automatisée selon la revendication 7, **caractérisé en ce que** ledit cerclage lumineux (31A, 31B) entoure une zone dotée d'organes de commande permettant d'interagir avec ledit système.

9. Système de conduite automatisée selon l'une des revendications 7 ou 8, **caractérisé en ce que** ledit indicateur lumineux sur volant (31) comporte deux dits cerclages lumineux (31A, 31B) implantés sur deux branches latérales dudit volant reliant son moyeu central à sa jante périphérique.

## Patentansprüche

1. Automatisiertes Fahrsystem für Kraftfahrzeug, das eine visuelle Kommunikationsschnittstelle (30) umfasst, die dazu bestimmt ist, den Fahrer über den Zustand des Fahrsystems zu informieren, und die einen Leuchtanzeiger (31) umfasst, der geeignet ist, Leuchtsignale auf dem Lenkrad des Fahrzeugs auszugeben; wobei die visuelle Kommunikationsschnittstelle (30) außerdem ein Head-Up-Display (32) umfasst, das geeignet ist, andere Leuchtsignale in dem Blickfeld des Fahrers über die Windschutzscheibe des Fahrzeugs hinaus anzuzeigen, **dadurch gekennzeichnet, dass** es zwei vollautomatische Fahrmodi mit Ausrücken zu dem manuellen Fahrmodus im Fall der Unverträglichkeit des Fahrkontexts mit ihrem Fortsetzen nach Ablaufen von zwei Übergangsphasen mit unterschiedlichen Dauern vorschlägt, wobei die Informationen in Zusammenhang mit dem Zustand eines der automatisierten Fahrmodi von Signalen übertragen werden, die nur von dem Leuchtanzeiger auf dem Lenkrad (31) abgegeben werden, während die, die den Zustand des anderen der automatisierten Fahrmodi betreffen, von Signalen übertragen werden, die gleichzeitig von dem Leuchtanzeiger auf dem Lenkrad (31) und dem Head-Up-Display (32) abgegeben werden.

2. Automatisiertes Fahrsystem nach Anspruch 1, **dadurch gekennzeichnet, dass** das Head-Up-Display (32) geeignet ist, stationäre, blinkende und/oder ablaufende Signale in unterschiedlichen Farben zu übertragen.

3. Automatisiertes Fahrsystem nach einem der Ansprüche 1 bis 2, **dadurch gekennzeichnet, dass** das Head-Up-Display (32) einen Projektor mit Licht emittierenden Dioden umfasst, der geeignet ist, ein Leuchtsignal direkt auf die Windschutzscheibe des Fahrzeugs derart zu projizieren, dass dieses Letztere zu dem Fahrer reflektiert wird, der davon ein virtuelles Bild über die Windschutzscheibe hinaus wahrnimmt.

4. Automatisiertes Fahrsystem nach Anspruch 3, **dadurch gekennzeichnet, dass** der Projektor mit Licht emittierenden Dioden hinter dem Armaturenbrett oder in der Deckenleuchte des Fahrzeugs implantiert ist.

5. Automatisiertes Fahrsystem nach einem der Ansprüche 1 bis 2, **dadurch gekennzeichnet, dass** das Head-Up-Display (32) einen Projektor umfasst, der geeignet ist, ein Leuchtsignal auf einen teilweise durchsichtigen Reflektor zu projizieren, der es zu dem Fahrer reflektiert, der davon ein virtuelles Bild über die Windschutzscheibe hinaus wahrnimmt.

6. Automatisiertes Fahrsystem nach einem der Ansprüche 1 bis 5, **dadurch gekennzeichnet, dass** der Leuchtanzeiger auf dem Lenkrad (31) angepasst ist, um Signale mit unterschiedlichen Farben vom stationären oder blinkenden Typ abzugeben.

7. Automatisiertes Fahrsystem nach einem der Ansprüche 1 bis 6, **dadurch gekennzeichnet, dass** der Leuchtanzeiger auf dem Lenkrad (31) mindestens eine Leuchtumreifung (31A, 31B) umfasst.

8. Automatisiertes Fahrsystem nach Anspruch 7, **dadurch gekennzeichnet, dass** die Leuchtumreifung (31A, 31B) eine Zone umgibt, die mit Steuerelementen versehen ist, die es erlauben, mit dem System in Wechselwirkung zu treten.

9. Automatisiertes Fahrsystem nach einem der Ansprüche 7 oder 8, **dadurch gekennzeichnet, dass** der Leuchtanzeiger auf dem Lenkrad (31) zwei Leuchtumreifungen (31A, 31B) umfasst, die auf zwei seitlichen Speichen des Lenkrads, die seine zentrale Nabe mit seiner Umgangsfelge verbinden, implantiert sind.

## Claims

1. An automated driving system for a motor vehicle comprising a visual communication interface (30) intended to inform the driver of the status of said driving system and including an indicator light (31) able to emit light signals on the steering wheel of said vehicle; said visual communication interface (30) further comprising a heads-up display (32) able to display other light signals in the field of vision of the driver beyond the windscreen of said vehicle, **characterized in that** it proposes two fully automated driving modes, with disengagement to the manual driving mode, in the event of non-compatibility of the driving context with their being pursued, at the end of two transition phases of different durations, the information relating to the status of one of said automated driving modes being transmitted by signals emitted solely by said indicator light (31) on the steering wheel, while those concerning the status of the other of said automated driving modes are transmitted by signals emitted simultaneously by said indicator light (31) on the steering wheel and said heads-up display (32).

2. The automated driving system according to Claim 1, **characterized in that** said heads-up display (32) is able to transmit signals of various colours, of the fixed, flasher and/or chaser type.

3. The automated driving system according to one of Claims 1 to 2, **characterized in that** said heads-up display (32) comprises a projector with light-emitting diodes able to project a light signal directly onto the windscreen of said vehicle so that it is reflected towards said driver, who perceives a virtual image thereof beyond said windscreen.

4. The automated driving system according to Claim 3, **characterized in that** said projector with light-emitting diodes is installed behind the dashboard or in the roof light of said vehicle.

5. The automated driving system according to one of Claims 1 to 2, **characterized in that** said heads-up display (32) comprises a projector able to project a light signal onto a partially transparent reflector which reflects it towards said driver, who perceives a virtual image thereof beyond said windscreen.

6. The automated driving system according to one of Claims 1 to 5, **characterized in that** said indicator light (31) on the steering wheel is able to emit signals of various colours of the fixed or flashing type.

7. The automated driving system according to one of Claims 1 to 6, **characterized in that** said indicator light (31) on the steering wheel comprises at least one light ring (31A, 31B).

8. The automated driving system according to Claim 7, **characterized in that** said light ring (31A, 31B) surrounds a zone equipped with control members permitting interaction with said system.

9. The automated driving system according to one of Claims 7 or 8, **characterized in that** said indicator light (31) on the steering wheel comprises two said light rings (31A, 31B) installed on two lateral spokes of said steering wheel connecting its central hub to its peripheral rim.
